# EUROPEAN PATENT APPLICATION

(11) **EP 4 810 368 A1**
(43) Date of publication of application: **23.09.2026**
(21) Application number: 25165306.9
(22) Date of filing: 21.03.2025
(51) Int. Cl.: B64C 1/18, B64C 25/52, B64C 25/32, B64C 27/04

(54) **A ROTORCRAFT WITH A SKID-TYPE LANDING GEAR OR A WHEEL-TYPE LANDING GEAR**

(71) Applicant: AIRBUS HELICOPTERS DEUTSCHLAND GmbH, 86609 Donauwörth (DE)
(72) Inventor: SAUER, Jochen, 86650 WEMDING (DE); BLACHA, Martin, 86609 DONAUWÖRTH (DE); HORSTMANN, Antonia, 89407 DILLINGEN (DE); KERSCHER, Daniel, 86753 MÖTTINGEN (DE); LARA SANCHEZ, Silvia, 81369 MÜNCHEN (DE); HRIN TROPOTEI, Mark, 28380 MADRID (ES)
(74) Representative: GPI Brevets

(57) **Abstract**

The invention is related to a rotorcraft comprising a fuselage with a load-carrying subfloor structure (220), a cockpit floor (230) that is mounted to the load-carrying subfloor structure; and a landing gear (115) that is at least partly connected to the load-carrying subfloor structure; wherein the landing gear is a skid-type landing gear (200) or a wheel-type landing gear; and wherein the cockpit floor comprises at least one insertion plate accommodation (236) that accommodates, if the landing gear is the skid-type landing gear, a first insertion plate (250) that is adapted for withstanding skid-type landing gear loads which are introduced from the skid-type landing gear into the load-carrying subfloor structure; or, if the landing gear is the wheel-type landing gear, a second insertion plate that is adapted for withstanding wheel-type landing gear loads which are introduced from the wheel-type landing gear into the cockpit floor and the load-carrying subfloor structure.

## Description

The invention is related to a rotorcraft that comprises a fuselage with a load-carrying subfloor structure, a cockpit floor that is mounted to the load-carrying subfloor structure, and a landing gear that is at least partly connected to the load-carrying subfloor structure, wherein the landing gear is one of a skid-type landing gear or a wheel-type landing gear.

The document JP 6204337 B2 describes generally an arrangement of a floor in a rotorcraft. An illustrative rotorcraft with a fuselage that comprises a load-carrying subfloor structure and a cockpit floor is described in the documents EP 0 581 626 B2 and EP 4 310 000 A1. Finally, landing gears which are attached to rotorcrafts, or aircrafts in general, are e. g. described in the documents EP 1 714867 B1, EP 1 717 144 B1, EP 3 263 451 A1, US 11 352 130 B2, and US 2018/050791 A1.

Rotorcrafts are generally either provided with retractable or partially retractable landing gears, or with fixed, i. e. non-retractable landing gears. Retractable or partially retractable landing gears are usually embodied as wheel-type landing gears, while fixed, i. e. non-retractable landing gears are usually embodied as both skid-type landing gears or wheel-type landing gears.

Use of either a wheel-type landing gear or a skid-type landing gear for a given rotorcraft mostly depends on a respective size and weight of the given rotorcraft. More particularly, wheel-type landing gears are usually implemented with larger, i. e. medium-to-heavy rotorcrafts in order to allow for an improved ground handling of such larger rotorcrafts, while smaller, i. e. light-to-medium rotorcrafts are usually implemented with skid-type landing gears. Nevertheless, although such smaller, i. e. light-to-medium rotorcrafts are usually implemented with skid-type landing gears, they may alternatively also be implemented with wheel-type landing gears, e. g. in response to a customer configuration order.

However, each landing gear configuration requires specific use, load cases, and loading conditions which result in a different load path for the landing gear loads in the fuselage and the floor. More specifically, depending on the type of landing gear which is respectively selected for a given rotorcraft, different requirements are applicable to the rotorcraft's floor. In fact, the floor is a main load-carrying part which is mounted to a respective load-carrying subfloor structure and must be designed and sized to withstand loads which are introduced directly from a front section of the landing gear or via the load-carrying subfloor structure.

More particularly, the upper portion of a skid-type landing gear is generally rigidly attached to the load-carrying subfloor structure to which the floor is mounted. Thus, loads introduced from the skid-type landing gear into the load-carrying subfloor structure are transferred from the load-carrying subfloor structure to the floor, but with a minor intensity. However, there is usually no direct introduction of loads from the front section of the skid-type landing gear into the floor.

A wheel-type landing gear configuration with a retractable or partially retractable wheel-type landing gear, in turn, is a structural configuration which significantly impacts the floor. More specifically, the front or nose section of a retractable or partially retractable wheel-type landing gear comprises an actuator which is usually rigidly attached to the floor and a frame of the load-carrying subfloor structure, e. g. by means of an associated actuator mounting bracket. The attachment of the actuator to the floor applies high loads on the floor which are significantly greater than in a skid-type landing gear configuration. These high and locally concentrated loads are directly introduced into the floor via the associated actuator mounting bracket. These high Higher loads are, however, directly linked to a need of a reinforcement in the floor which directly increases an overall weight and complexity of the floor.

As a result, if the floor of a given rotorcraft is designed for use in a skid-type landing gear configuration, it normally cannot not be used in a wheel-type landing gear configuration as it will not withstand the high local loads from the actuator loads. If, however, the floor of a given rotorcraft is designed for use in a wheel-type landing gear configuration, it may theoretically be used in a skid-type landing gear configuration, but will usually have a greater overall weight than required in the skid-type landing gear configuration.

Nevertheless, it is commonly recognized that the aim of an efficient and competitive rotorcraft design is generally to be always optimized in weight, cost and reliability. The parameter cost is with respect to the landing gear configuration related to a limited number of parts and a short lead time of manufacturing, which would suggest an installation of a common floor independent of a respectively selected landing gear configuration. However, the assumption of always installing a common floor independent of the landing gear configuration is not in line with the requirement of being weight optimized, as explained above.

Therefore, it is an object of the present invention to provide a new rotorcraft with a floor that is adapted for being commonly used in a skid-type landing gear configuration and in a wheel-type landing gear configuration.

This object is solved by a rotorcraft comprising the features of claim 1. More specifically, the rotorcraft comprises a fuselage with a load-carrying subfloor structure, a cockpit floor that is mounted to the load-carrying subfloor structure, and a landing gear that is at least partly connected to the load-carrying subfloor structure, wherein the landing gear is one of a skid-type landing gear or a wheel-type landing gear. The cockpit floor comprises at least one insertion plate accommodation that accommodates, if the landing gear is the skid-type landing gear, a first insertion plate that is adapted for withstanding skid-type landing gear loads which are introduced from the skid-type landing gear into the load-carrying subfloor structure; or, if the landing gear is the wheel-type landing gear, a second insertion plate that is adapted for withstanding wheel-type landing gear loads which are introduced from the wheel-type landing gear into the cockpit floor and the load-carrying subfloor structure.

At this point, it should be noted that the first insertion plate that is adapted for withstanding the skid-type landing gear loads which are introduced from the skid-type landing gear into the load-carrying subfloor structure is essentially configured to withstand loads resulting from passengers, pilots, and payload. In fact, the skid-type landing gear loads which are introduced from the skid-type landing gear into the load-carrying subfloor structure are only minor and indirect loads acting on the first insertion plate. The second insertion plate that is adapted for withstanding wheel-type landing gear loads which are introduced from the wheel-type landing gear into the cockpit floor and the load-carrying subfloor structure must, however, be configured to withstand direct and very local loads which are at least partly directly introduced from the wheel-type landing gear into the second insertion plate.

Advantageously, the rotorcraft according to the present invention comprises either a skid-type landing gear or a wheel-type landing gear and may, thus, be provided with different landing gear configurations. However, independent of a respectively selected landing gear configuration the rotorcraft may comprise a common fuselage with a common load-carrying subfloor structure, as well as a common cockpit floor. This is enabled by a modular construction of the cockpit floor which involves provision of exchangeable insertion plates. The modularity is an improved compromise between cost and weight.

More particularly, a specific insertion plate may be provided for each possible landing gear configuration and adapted to the specific load introduction cases associated with the landing gear configurations. For instance, the insertion plate for the wheel-type landing gear configuration may be provided with an interface area which is suitable to withstand high local loads, i. e. with a high load introduction area. If this high load introduction area is damaged or subjected to fatigue life limit, the insertion plate can be replaced easily.

In general, the high load introduction area is not required in the insertion plate for the skid-type landing gear configuration. In fact, the wheel-type landing gear loads which are introduced from the wheel-type landing gear directly into the cockpit floor are usually significantly higher than the skid-type landing gear loads which are introduced from the skid-type landing gear into the load-carrying subfloor structure and, thus, only indirectly into the cockpit floor.

Advantageously, if different landing gear configurations are to be installed in a given type of rotorcraft, a basic version of the rotorcraft may be manufactured and only local modifications related to the respectively required insertion plate have to be made subsequently. Due to such an increased communality, it is possible to use the same final assembly line for rotorcrafts with skid-type landing gears and wheel-type landing gears, thus, significantly reducing manufacturing costs and production/lead time.

In particular, a huge communality of rotorcraft variants is achieved offering a high variability as only a local area, i. e. the insertion plate, needs to be exchanged for adapting a premanufactured rotorcraft to a desired landing gear configuration. Thus, a customer can select a desired landing gear configuration even in a very late phase of rotorcraft assembly and even a rather quick and simple exchange between both landing gear configurations is possible.

According to some aspects, the first insertion plate comprises at least a first number of reinforcement ribs formed on a plate side of the first insertion plate that faces the load-carrying subfloor structure.

The first number of reinforcement ribs preferably comprises a first plurality of longitudinal ribs and a first plurality of transversal ribs.

By way of example, the longitudinal ribs of the first plurality of longitudinal ribs and the transversal ribs of the first plurality of transversal ribs may be arranged at right angles with respect to each other for forming rectangular reinforcement structures. However, other angles and other geometrical reinforcement structures are also possible.

In an illustrative realization, the first insertion plate and the first number of reinforcement ribs may comprise aluminum. However, other materials are also contemplated, such as e. g. a fiber-reinforced polymer, in particular a carbon fiber-reinforced polymer.

Preferably, the first insertion plate comprises a first attachment interface area for attachment to the cockpit floor. The first attachment interface area may be adapted to enable riveting, bolting or screwing of the first insertion plate to the cockpit floor.

According to some aspects, the second insertion plate comprises an interface area formed on a plate side of the second insertion plate that faces the load-carrying subfloor structure, wherein the interface area is adapted for attachment to an actuator mounting bracket of the wheel-type landing gear.

The second insertion plate may be configured for transfer of load from an actuator of the wheel-type landing gear via the actuator mounting bracket into the cockpit floor.

Preferably, the second insertion plate comprises at least a second number of reinforcement ribs formed on the plate side of the second insertion plate that faces the load-carrying subfloor structure. The second number is preferentially, but not mandatorily, greater than the first number.

The second number of reinforcement ribs may form at least a first reinforcement section and a second reinforcement section which are separated from each other by an associated transversal rib. The first reinforcement section may comprise the interface area.

Preferably, the second number of reinforcement ribs comprises a plurality of longitudinal and oblique ribs which form a fan-shaped (or funnel-shaped) reinforcement structure in the second reinforcement section.

In an illustrative realization, the second insertion plate and the second number of reinforcement ribs may comprise aluminum. However, other materials are also contemplated, such as e. g. a fiber-reinforced polymer, in particular a carbon fiber-reinforced polymer.

Preferably, the second insertion plate comprises a second attachment interface area for attachment to the cockpit floor. The second attachment interface area may be adapted to enable riveting, bolting or screwing of the second insertion plate to the cockpit floor.

According to some aspects, the load-carrying subfloor structure forms a crossbar tunnel for accommodation of a crossbar of the landing gear, if the landing gear is the skid-type landing gear.

Preferably, at least two reinforcement brackets are mounted to the load-carrying subfloor structure in the crossbar tunnel, if the landing gear is the wheel-type landing gear.

Preferred embodiments of the invention are outlined by way of example in the following description with reference to the attached drawings. In these attached drawings, identical or identically functioning components and elements are labeled with identical reference numbers and characters and are, consequently, only described once in the following description.
- Figure 1 shows a lateral view of a rotorcraft with a landing gear,
- Figure 2 shows a perspective view of a cockpit floor which is mounted to a load-carrying subfloor structure to which the landing gear of Figure 1 according to a first embodiment is mounted by means of suitable fittings,
- Figure 3 shows a perspective view of the fittings of Figure 2,
- Figure 4 shows the cockpit floor and the load-carrying subfloor structure of Figure 2, as well as an insertion plate according to a first embodiment,
- Figure 5 shows perspective views of the insertion plate of Figure 4,
- Figure 6 shows perspective views of an alternative insertion plate according to a second embodiment,
- Figure 7 shows perspective views of a nose-wheel landing gear and associated mounting elements,
- Figure 8 shows a perspective view of the cockpit floor and the load-carrying subfloor structure of Figure 4 to which the nose-wheel landing gear and the associated mounting elements of Figure 7 are mounted, and
- Figure 9 shows a lateral view of the arrangement of Figure 8.

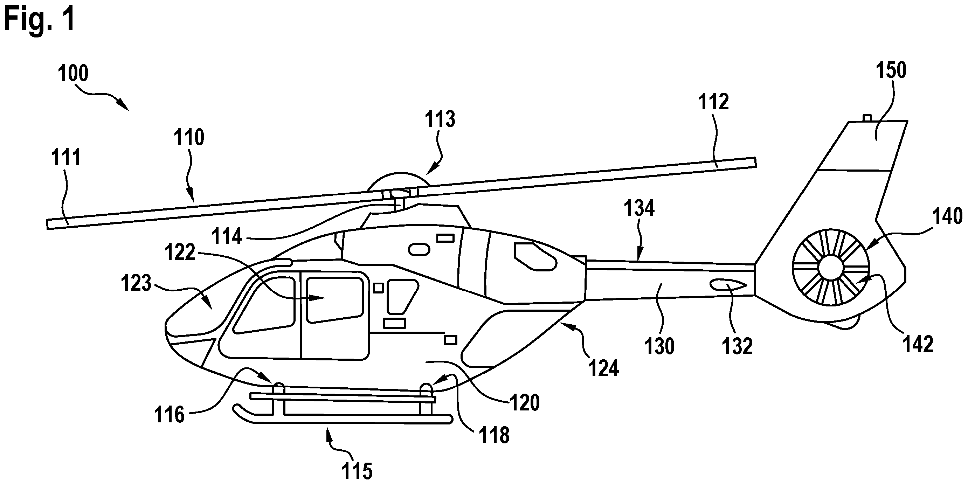

Figure 1 shows an aircraft 100 that is exemplarily illustrated as a rotorcraft and, more particularly, as a helicopter. Thus, for purposes of simplicity and clarity, the aircraft 100 is hereinafter referred to as "the helicopter 100".

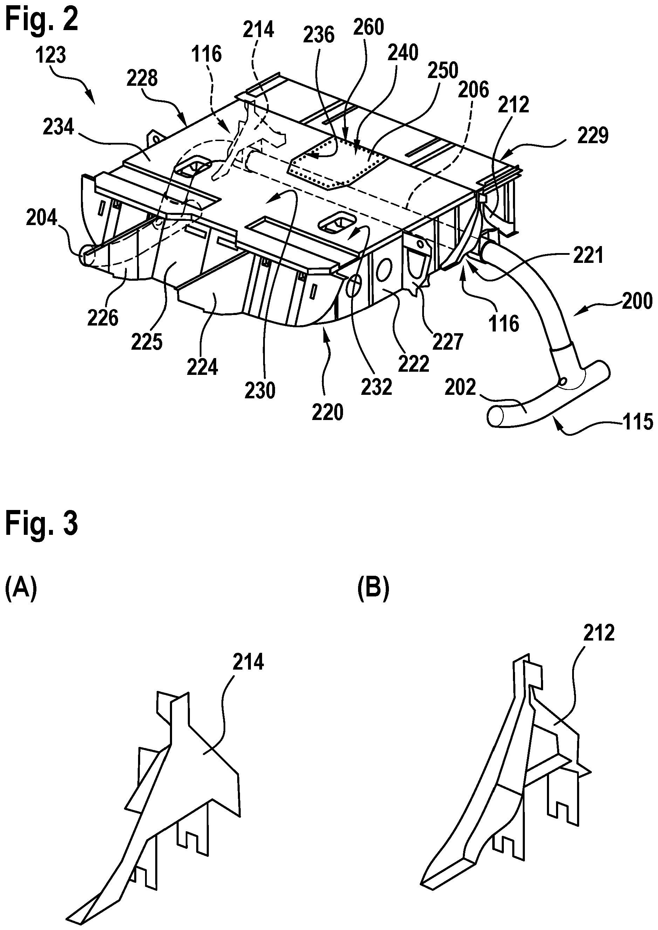

The helicopter 100 comprises a landing gear 115 and a fuselage 120. The fuselage 120 comprises a load-carrying subfloor structure (220 in Figure 2) and a cockpit floor (230 in Figure 2) is mounted to the load-carrying subfloor structure (220 in Figure 2). The landing gear 115 is illustratively mounted to the helicopter 100 at a front mounting section 116 and a rear mounting section 118. More specifically, the landing gear 115 is at least partly connected to the load-carrying subfloor structure (220 in Figure 2).

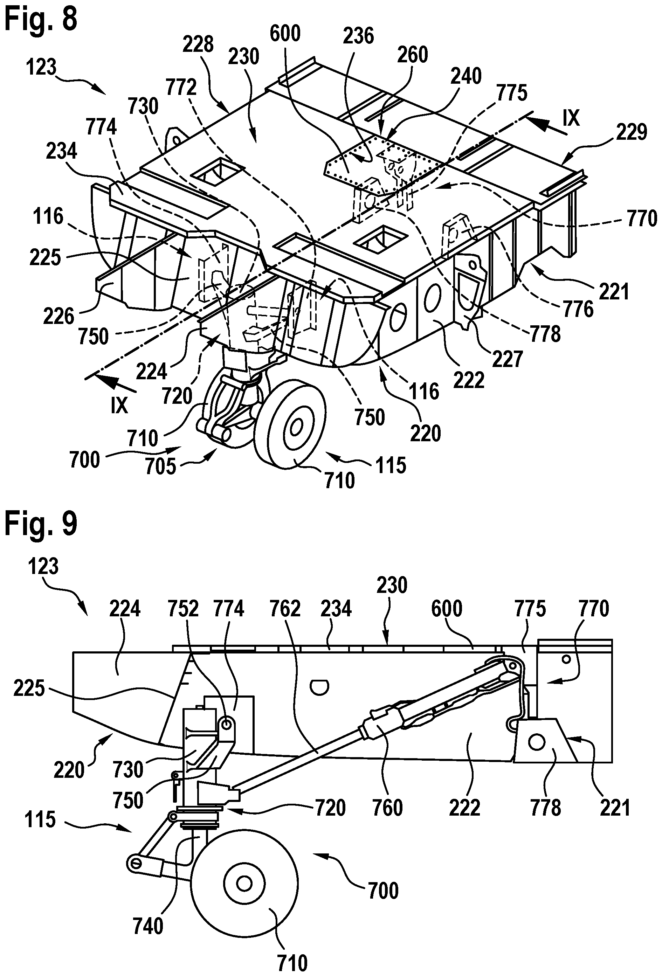

According to the present invention, the helicopter 100 may be adapted to a skid-type landing gear configuration as illustrated, or to a wheel-type landing gear configuration. In the skid-type landing gear configuration, the landing gear 115 is a skid-type landing gear, as described below at Figure 2, and in the wheel-type landing gear configuration, the landing gear 115 is a wheel-type landing gear, as described below at Figure 8.

The fuselage 120 illustratively forms an aircraft interior region 122, 123 and a rear fuselage 124. The aircraft interior region 122, 123 preferably accommodates at least a cockpit 122 and may further accommodate a cabin 123 for passengers and/or cargo. The rear fuselage 124 is connected to a tail boom 130.

By way of example, the helicopter 100 further comprises at least one multi-blade main rotor 110 for providing lift and forward or backward thrust during operation. The at least one multi-blade main rotor 110 comprises a plurality of rotor blades 111, 112 which are mounted at an associated rotor head 113 to a rotor shaft 114, which rotates in operation of the helicopter 100 around an associated rotor axis.

Illustratively, the helicopter 100 further comprises at least one preferentially shrouded counter-torque device 140 configured to provide counter-torque during operation, i. e. to counter the torque created by rotation of the at least one multi-blade main rotor 110 for purposes of balancing the helicopter 100 in terms of yaw. The at least one counter-torque device 140 is illustratively provided at an aft section of the tail boom 130 and preferably comprises a tail rotor 142. The aft section of the tail boom 130 preferably further comprises a fin 150. Illustratively, the tail boom 130 is also provided with a suitable horizontal stabilizer 132.

The tail boom 130 is illustratively implemented as a slim beam element. By way of example, the tail boom 130 comprises at least partly a tail boom cone 134.

Figure 2 shows a lower section of the cockpit 123 of the helicopter 100 of Figure 1. The lower section of the cockpit 123 illustratively comprises a load-carrying subfloor structure 220 which, by way of example, comprises a plurality of longerons 222, 224, 226, 228 as well as frames 225, 227, 229 which interconnect the longerons 222, 224, 226, 228.

Furthermore, a front section of the landing gear 115 of Figure 1 is shown. The front section of the landing gear 115 is connected to the helicopter 100 of Figure 1 at the front mounting section 116 of Figure 1. More specifically, the front section of the landing gear 115 is connected to the load-carrying subfloor structure 220 such that the landing gear 115 of Figure 1 as a whole is at least partly connected to the load-carrying subfloor structure 220. The landing gear 115 is illustratively a skid-type landing gear 200 that e. g. comprises a pair of skids 202, 204 which are interconnected in the front section of the landing gear 115 via a crossbar 206.

By way of example, the crossbar 206 is mounted to the load-carrying subfloor structure 220 by means of suitable skid-type landing gear fittings 212, 214. The skid-type landing gear fittings 212, 214 are rigidly attached to the longerons 222, 228 of the load-carrying subfloor structure 220 which forms a crossbar tunnel 221 for accommodation of the crossbar 206.

Illustratively, a cockpit floor 230 is mounted to the load-carrying subfloor structure 220. Preferably, the cockpit floor 230 comprises at least a load-carrying floor panel 234. The cockpit floor 230 and, more particularly, the load-carrying floor panel 234 comprises at least one insertion plate accommodation 236 that is configured to accommodate a landing gear-specific insertion plate 240 which is designed for dedicated loads resulting from a selected landing gear configuration. By combining the load-carrying floor panel 234 with the landing gear-specific insertion plate 240, a modular design of the cockpit floor 230 is achieved.

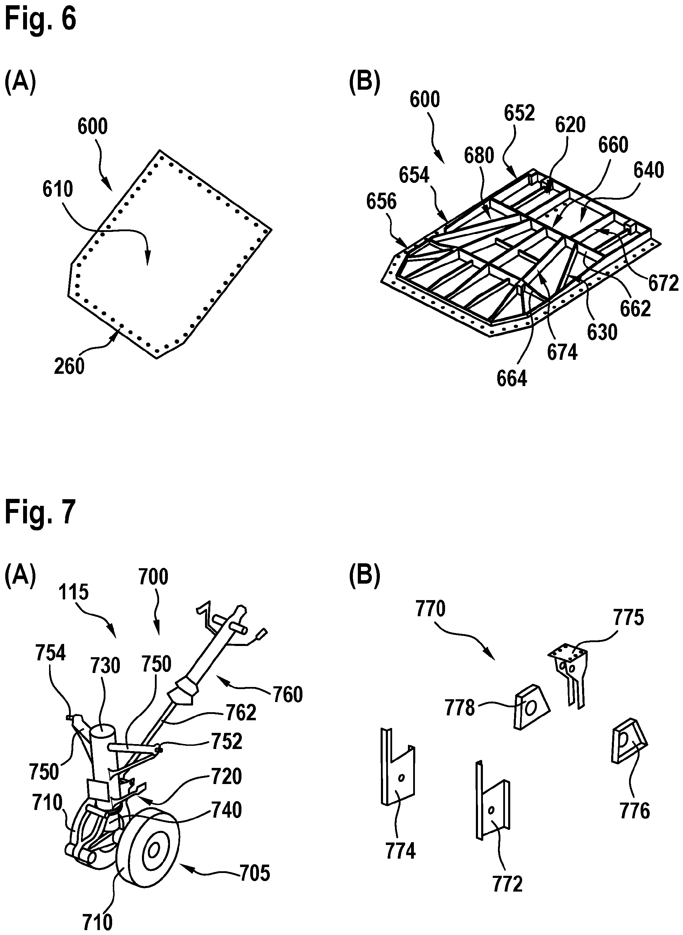

According to the present invention, the landing gear-specific insertion plate 240 may at least be one of a skid-type landing gear insertion plate 250 or a wheel-type landing gear insertion plate (600 in Figure 6). In the illustrated realization of Figure 2, the skid-type landing gear insertion plate 250 is mounted to the at least one insertion plate accommodation 236, as the landing gear 115 is the skid-type landing gear 200. The skid-type landing gear insertion plate 250 is adapted for withstanding skid-type landing gear loads which are introduced from the skid-type landing gear 200 into the load-carrying subfloor structure 220.

Illustratively, the skid-type landing gear insertion plate 250 comprises an attachment interface area 260 for attachment to the cockpit floor 230. The attachment interface area 260 is preferably adapted to enable riveting, bolting or screwing of the skid-type landing gear insertion plate 250 to the cockpit floor 230. By way of example, the attachment interface area 260 is riveted to an upper side 232 of the cockpit floor 230.

Figure 3 shows in parts (A) and (B) the skid-type landing gear fittings 212, 214 of Figure 2. However, suitable skid-type landing gear fittings which may be used to implement the skid-type landing gear fittings 212, 214 are well-known to the person skilled in the art and, as such, not part of the present invention. Therefore, a detailed description of the skid-type landing gear fittings 212, 214 is omitted, for brevity and conciseness.

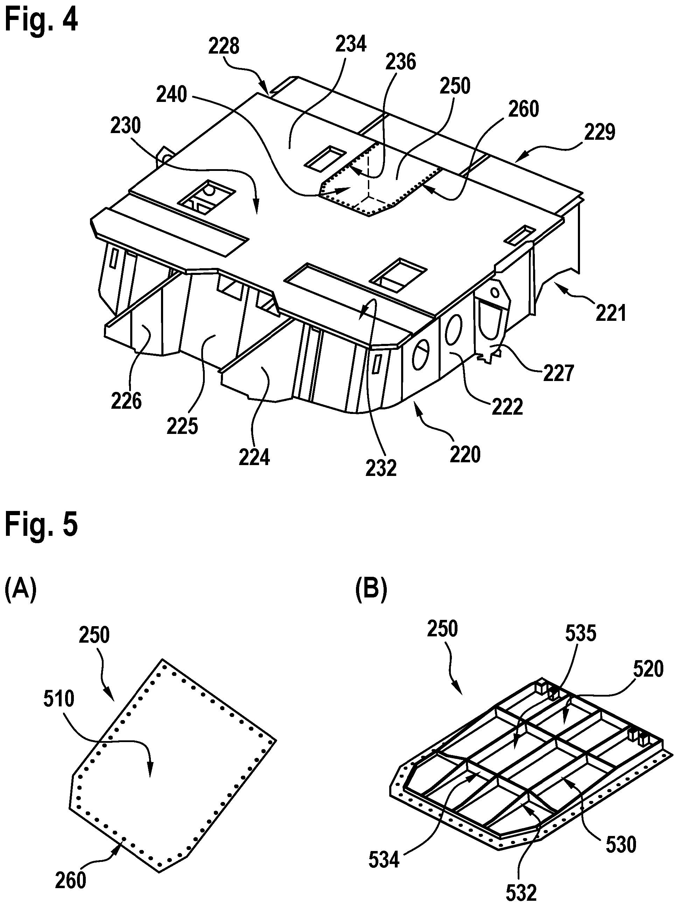

Figure 4 shows in accordance with Figure 2 the load-carrying subfloor structure 220 with the plurality of longerons 222, 224, 226, 228 and frames 225, 227, 229, as well as the cockpit floor 230 and the skid-type landing gear insertion plate 250, for further illustrating accommodation of the skid-type landing gear insertion plate 250 in the at least one insertion plate accommodation 236. The attachment interface area 260 of the skid-type landing gear insertion plate 250 is illustratively riveted to the upper side 232 of the cockpit floor 230.

Figure 5 shows in parts (A) and (B) the skid-type landing gear insertion plate 250 with the attachment interface area 260 of Figure 2 and Figure 4. More specifically, part (A) shows an upper plate side 510 of the skid-type landing gear insertion plate 250 and part (B) shows a lower plate side 520 thereof. The lower plate side 520 is the plate side of the skid-type landing gear insertion plate 250 that faces the load-carrying subfloor structure 220 in Figure 2 and Figure 4.

As illustrated in part (B) of Figure 5, the skid-type landing gear insertion plate 250 preferably comprises at least a predetermined number of reinforcement ribs 530 formed on the lower plate side 520. Additional reinforcement ribs may be formed on the upper plate side 510. Alternatively, the predetermined number of reinforcement ribs 530 may be formed on the upper plate side 510. The predetermined number of reinforcement ribs 530 is preferably optimized for skid-type landing gear loads.

By way of example, the predetermined number of reinforcement ribs 530 comprises a plurality of longitudinal ribs 532 and a plurality of transversal ribs 534. Illustratively, the longitudinal ribs of the first plurality of longitudinal ribs 532 and the transversal ribs of the first plurality of transversal ribs 534 are arranged at right angles with respect to each other for forming rectangular reinforcement structures 535. However, other angles which may be selected to provide alternative reinforcement structures, are likewise contemplated. In other words, other angles and other geometrical reinforcement structures are also possible.

In an illustrative realization, the skid-type landing gear insertion plate 250 and the predetermined number of reinforcement ribs 530 comprise aluminum. However, other materials are also contemplated, such as e. g. a fiber-reinforced polymer, in particular a carbon fiber-reinforced polymer, and so on.

Figure 6 shows in parts (A) and (B) a wheel-type landing gear insertion plate 600 for use with the cockpit floor 230 of Figure 2 and Figure 4 in a wheel-type landing gear configuration. In analogy with the skid-type landing gear insertion plate 250 of Figure 2 and Figure 4, the wheel-type landing gear insertion plate 600 comprises the attachment interface area 260.

Part (A) of Figure 6 shows an upper plate side 610 of the wheel-type landing gear insertion plate 600 and part (B) shows a lower plate side 620 thereof. The lower plate side 620 is the plate side of the wheel-type landing gear insertion plate 600 that is designed to face the load-carrying subfloor structure 220 of Figure 2 and Figure 4.

As illustrated in part (B) of Figure 6, the wheel-type landing gear insertion plate 600 comprises an interface area 640 formed on the lower plate side 620. The interface area 640 is preferably adapted for attachment to an actuator mounting bracket (775 in Figure 8 and Figure 9) of a wheel-type landing gear (700 in Figure 8 and Figure 9).

Illustratively, the wheel-type landing gear insertion plate 600 comprises at least a predetermined number of reinforcement ribs 630 formed on the lower plate side 620. Additional reinforcement ribs may be formed on the upper plate side 610. Alternatively, the predetermined number of reinforcement ribs 630 may be formed on the upper plate side 610. The predetermined number of reinforcement ribs 630 is preferably optimized for wheel-type landing gear loads. Furthermore, the predetermined number of reinforcement ribs 630 may be greater than the predetermined number of reinforcement ribs 530 of Figure 5.

By way of example, the predetermined number of reinforcement ribs 630 forms at least a reinforcement section 652 and one or more other reinforcement sections 654, 656 which are separated from each other by associated transversal ribs 660. Illustratively, the reinforcement section 652 is separated from the reinforcement section 654 by a transversal rib 662, and the reinforcement section 654 is separated from the reinforcement section 656 by a transversal rib 664. Preferably, the reinforcement section 652 comprises the interface area 640.

Illustratively, the predetermined number of reinforcement ribs 630 comprises a plurality of longitudinal ribs 672 and/or a plurality of longitudinal and oblique ribs 674. The longitudinal ribs 672 preferably delimit the interface area 640 in the reinforcement section 652. The longitudinal and oblique ribs 674 preferably form a fan-shaped (or funnel-shaped) reinforcement structure 680 in the reinforcement section 654 and/or the reinforcement section 656.

In an illustrative realization, the wheel-type landing gear insertion plate 600 and the predetermined number of reinforcement ribs 630 comprise aluminum. However, other materials are also contemplated, such as e. g. a fiber-reinforced polymer, in particular a carbon fiber-reinforced polymer, and so on.

Figure 7 shows in part (A) an illustrative wheel-type landing gear 700 and, more particularly, an illustrative nose-wheel landing gear 705 that may be used as the landing gear 115 in Figure 1 and Figure 2. Illustratively, the nose-wheel landing gear 705 comprises tandem wheels 710, a shock absorber 720, shock absorber mounting arms 750, and an actuator 760. By way of example, the shock absorber 720 is connected via an actuator rod 762 to the actuator 760.

The shock absorber 720 is connected to the tandem wheels 710. Illustratively, the shock absorber 720 comprises a shock absorber tube 730 and a shock absorber rod 740 telescopically mounted to the shock absorber tube 730. The shock absorber rod 740 may also be referred to as a shock absorber cylinder.

The shock absorber mounting arms 750 extend laterally from the shock absorber tube 730 and are respectively provided with trunnions 752, 754. Preferably, the shock absorber mounting arms 750 are identical, at least within predetermined manufacturing tolerances, and symmetrically arranged on diametrically opposed sides of the shock absorber 720, i. e. the shock absorber tube 730.

The shock absorber tube 730 may be linked via a torque link to the shock absorber rod 740. However, for simplicity and clarity of the drawing the torque link is not labeled separately.

At this point, it should be noted that a nose-wheel landing gear which is suitable to implement the nose-wheel landing gear 705 is well-known to the person skilled in the art and, as such, not part of the present invention. Therefore, a more detailed description of the nose-wheel landing gear 705 is omitted, for brevity and conciseness.

Part (B) of Figure 7 shows mounting elements 770 which are used for mounting the wheel-type landing gear 700 and, more particularly, the nose-wheel landing gear 705 of part (A) to the load-carrying subfloor structure 220 and the cockpit floor 230 of Figure 2 and Figure 4, which is then equipped with the wheel-type landing gear insertion plate 600 of Figure 6, as illustrated in Figure 8 and Figure 9. Illustratively, the mounting elements 770 comprise wheel-type landing gear fittings 772, 774 which are adapted for mounting of the trunnions 752, 754 of the shock absorber mounting arms 750, and an actuator mounting bracket 775 which is adapted for mounting of the actuator 760. Furthermore, two reinforcement brackets 776, 778 are provided for reinforcement of associated longerons in the crossbar tunnel 221 of the load-carrying subfloor structure 220 of Figure 2 and Figure 4.

However, suitable mounting elements which may be used to implement the mounting elements 770 are well-known to the person skilled in the art and, as such, not part of the present invention. Therefore, a detailed description of the mounting elements 770 is omitted, for brevity and conciseness.

Figure 8 shows the landing gear 115 and the load-carrying subfloor structure 220 of Figure 2, which comprises the plurality of longerons 222, 224, 226, 228 as well as the frames 225, 227, 229. The cockpit floor 230 of Figure 2, which illustratively comprises the load-carrying floor panel 234, is mounted to the load-carrying subfloor structure 220, which forms the crossbar tunnel 221.

However, in contrast to Figure 2 the landing gear 115 is now the wheel-type landing gear 700 of Figure 7 and, more particularly, the nose-wheel landing gear 705 of Figure 7, and the landing gear-specific insertion plate 240 is now the wheel-type landing gear insertion plate 600 of Figure 6. In other words, Figure 8 is related to a wheel-type landing gear configuration of the helicopter 100 of Figure 1.

In the wheel-type landing gear configuration, the nose-wheel landing gear 705 is connected to the load-carrying subfloor structure 220 and the wheel-type landing gear insertion plate 600. The wheel-type landing gear insertion plate 600 is adapted for withstanding wheel-type landing gear loads which are introduced from the wheel-type landing gear 700, i. e. the nose-wheel landing gear 705, into the cockpit floor 230 and the load-carrying subfloor structure 220.

More specifically, the shock absorber mounting arms 750 and, more particularly, the trunnions 752, 754 of Figure 7, are preferably mounted to the load-carrying subfloor structure 220 by means of the wheel-type landing gear fittings 772, 774 of Figure 7. Illustratively, the wheel-type landing gear fittings 772, 774 are rigidly attached to the longerons 224, 226 of the load-carrying subfloor structure 220.

Attachment of the actuator 760 of Figure 7 of the nose-wheel landing gear 705 is described below at Figure 9. In fact, illustration of the actuator 760 is omitted in Figure 8 for clearly illustrating positioning of the actuator mounting bracket 775 and the two reinforcement brackets 776, 778 in the load-carrying subfloor structure 220.

More specifically, the actuator mounting bracket 775 is preferably rigidly attached to the wheel-type landing gear insertion plate 600 and to the load-carrying subfloor structure 220, e. g. to a frame of the load-carrying subfloor structure 220. More particularly, the actuator mounting bracket 775 is preferably rigidly attached to the interface area 640 of Figure 6 of the wheel-type landing gear insertion plate 600, e. g. by means of riveting, bolting or screwing. The reinforcement brackets 776, 778 are preferably mounted to the load-carrying subfloor structure 220 in the crossbar tunnel 221, e. g. to the longerons 224, 226 of the load-carrying subfloor structure 220 to reinforce these longerons 224, 226.

Figure 9 shows the load-carrying subfloor structure 220 and the cockpit floor 230 with the wheel-type landing gear 700, i. e. the nose-wheel landing gear 705, of Figure 8 according to the wheel-type landing gear configuration. More specifically, Figure 9 further illustrates attachment of the actuator 760 of Figure 7 of the nose-wheel landing gear 705 to the actuator mounting bracket 775 of Figure 8, which is rigidly attached to the wheel-type landing gear insertion plate 600 of Figure 8. Therein, the wheel-type landing gear insertion plate 600 may be configured for transfer of load from the actuator 760 of the wheel-type landing gear 700 via the actuator mounting bracket 775 into the cockpit floor 230. Moreover, Figure 9 further illustrates arrangement of the reinforcement bracket 778 in the crossbar tunnel 221 of the load-carrying subfloor structure 220.

It should be noted that the above described embodiments are merely described to illustrate possible embodiments of the present invention, but not in order to restrict the present invention thereto. Instead, multiple modifications and variations of the above described embodiments are possible and should, therefore, also be considered as being part of the invention.

For instance, although the present invention is described by way of example with respect to provision of a cockpit floor with at least one insertion plate that is adapted to a selected landing gear configuration, the principles of the invention likewise apply to other regions of a floor in a rotorcraft or an aircraft in general. By way of example, also the floor at the rear mounting section 118 according to Figure 1 may be implemented with at least one suitable insertion plate according to the present invention, and so on.

### Reference List

100 rotorcraft
110 multi-blade main rotor
111, 112 rotor blades
113 rotor head
114 rotor shaft
115 landing gear
116 landing gear front mounting section
118 landing gear rear mounting section
120 fuselage
122 cabin
123 cockpit
124 rear fuselage
130 tail boom
132 horizontal stabilizer
134 tail boom cone
140 counter-torque device
142 tail rotor
150 fin
200 skid-type landing gear
202, 204 skids
206 crossbar
212, 214 skid-type landing gear fittings
220 load-carrying subfloor structure
222, 224, 226, 228 longerons
225, 227, 229 frames
221 crossbar tunnel
230 cockpit floor
232 cockpit floor upper side
234 load-carrying floor panel
236 landing gear-specific insertion plate accommodation
240 landing gear-specific insertion plate
250 skid-type landing gear insertion plate
260 insertion plate attachment interface area
510 skid-type landing gear insertion plate upper side
520 skid-type landing gear insertion plate lower side
530 skid-type landing gear load-optimized reinforcement ribs
532 longitudinal ribs
534 transversal ribs
535 rectangular reinforcement structures
600 wheel-type landing gear insertion plate
610 wheel-type landing gear insertion plate upper side
620 wheel-type landing gear insertion plate lower side
630 wheel-type landing gear load-optimized reinforcement ribs
640 actuator mounting bracket interface area
652, 654, 656 reinforcement sections
660 transversal ribs
662, 664 individual transversal ribs
672 longitudinal ribs
674 longitudinal and oblique ribs
680 fan-shaped reinforcement structure
700 wheel-type landing gear
705 nose-wheel landing gear
710 tandem wheels
720 shock absorber
730 shock absorber tube
740 shock absorber rod
750 shock absorber mounting arms
752, 754 mounting arm trunnions
760 nose-wheel landing gear actuator
762 actuator mounting rod
770 wheel-type landing gear mounting elements
772, 774 wheel-type landing gear fittings
776, 778 reinforcement brackets
775 actuator mounting bracket

## Claims

1. A rotorcraft (100) comprising:
a fuselage (120) with a load-carrying subfloor structure (220);
a cockpit floor (230) that is mounted to the load-carrying subfloor structure (220); and
a landing gear (115) that is at least partly connected to the load-carrying subfloor structure (220), wherein the landing gear (115) is one of a skid-type landing gear (200) or a wheel-type landing gear (700);
**characterized in that**
the cockpit floor (230) comprises at least one insertion plate accommodation (236) that accommodates:
if the landing gear (115) is the skid-type landing gear (200), a first insertion plate (250) that is adapted for withstanding skid-type landing gear loads which are introduced from the skid-type landing gear (200) into the load-carrying subfloor structure (220); or
if the landing gear (115) is the wheel-type landing gear (700), a second insertion plate (600) that is adapted for withstanding wheel-type landing gear loads which are introduced from the wheel-type landing gear (700) into the cockpit floor (230) and the load-carrying subfloor structure (220).

2. The rotorcraft (1) of claim 1, wherein the first insertion plate (250) comprises at least a first number of reinforcement ribs (530) formed on a plate side (520) of the first insertion plate (250) that faces the load-carrying subfloor structure (220).

3. The rotorcraft (1) of claim 2, wherein the first number of reinforcement ribs (530) comprises a first plurality of longitudinal ribs (532) and a first plurality of transversal ribs (534).

4. The rotorcraft (1) of claim 3, wherein the longitudinal ribs of the first plurality of longitudinal ribs (532) and the transversal ribs of the first plurality of transversal ribs (534) are arranged at right angles with respect to each other for forming rectangular reinforcement structures (535).

5. The rotorcraft (1) of any one of claims 2 to 4, wherein the first insertion plate (250) and the first number of reinforcement ribs (530) comprise aluminum.

6. The rotorcraft (1) of any one of the preceding claims, wherein the first insertion plate (250) comprises a first attachment interface area (260) for attachment to the cockpit floor (230), and wherein the first attachment interface area (260) is adapted to enable riveting, bolting or screwing of the first insertion plate (250) to the cockpit floor (230).

7. The rotorcraft (1) of any one of the preceding claims, wherein the second insertion plate (600) comprises an interface area (640) formed on a plate side (620) of the second insertion plate (600) that faces the load-carrying subfloor structure (220), wherein the interface area (640) is adapted for attachment to an actuator mounting bracket (775) of the wheel-type landing gear (700).

8. The rotorcraft (1) of claim 7, wherein the second insertion plate (600) is configured for transfer of load from an actuator (760) of the wheel-type landing gear (700) via the actuator mounting bracket (775) into the cockpit floor (230).

9. The rotorcraft (1) of claim 7 or 8, wherein the second insertion plate (600) comprises at least a second number of reinforcement ribs (630) formed on the plate side (620) of the second insertion plate (600) that faces the load-carrying subfloor structure (220), and wherein the second number is greater than the first number.

10. The rotorcraft (1) of claim 9, wherein the second number of reinforcement ribs (630) forms at least a first reinforcement section (652) and a second reinforcement section 654, 656) which are separated from each other by an associated transversal rib (662, 664), wherein the first reinforcement section (652) comprises the interface area (640).

11. The rotorcraft (1) of claim 10, wherein the second number of reinforcement ribs (630) comprises a plurality of longitudinal and oblique ribs (674) which form a fan-shaped reinforcement structure (680) in the second reinforcement section (654).

12. The rotorcraft (1) of any one of claims 9 to 11, wherein the second insertion plate (600) and the second number of reinforcement ribs (630) comprise aluminum.

13. The rotorcraft (1) of any one of the preceding claims, wherein the second insertion plate (600) comprises a second attachment interface area (260) for attachment to the cockpit floor (230), and wherein the second attachment interface area (260) is adapted to enable riveting, bolting or screwing of the second insertion plate (600) to the cockpit floor (230).

14. The rotorcraft (1) of any one of the preceding claims, wherein the load-carrying subfloor structure (220) forms a crossbar tunnel (221) for accommodation of a crossbar (206) of the landing gear (115), if the landing gear (115) is the skid-type landing gear (200).

15. The rotorcraft (1) of claim 14, wherein at least two reinforcement brackets (776, 778) are mounted to the load-carrying subfloor structure (220) in the crossbar tunnel (221), if the landing gear (115) is the wheel-type landing gear (700).
